# EUROPEAN PATENT APPLICATION

(11) **EP 1 911 628 A1**
(43) Date of publication of application: **16.04.2008**
(21) Application number: 06021248.7
(22) Date of filing: 10.10.2006
(51) Int. Cl.: B60R 11/02, B60R 7/06, B60R 11/04, A47B 23/04

(54) **Holding device**

(71) Applicant: Teng, Ko-Chung, Wunschan D Taipei (TW)
(72) Inventor: The designation of the inventor has not yet been filed
(74) Representative: Hauck Patent- und Rechtsanwälte

(57) **Abstract**

A holding device is mounted between a vehicle's windshield and has a base (10), a stabilizing panel (20) and a bracket (30). The base (10) is attached detachably to the windshield. The stabilizing panel (20) is mounted pivotally on the base (10) and is attached detachably to the dashboard. The bracket (30) is mounted slidably on the base (10) and connects to the stabilizing panel (20).

## Description

### 1. Field of the Invention

The present invention relates to a holding device, especially to a holding device that holds a portable electronic device and is used in vehicles.

### 2. Description of the Prior Arts

As modem technology has progressed, portable electronic appliances are widely used. For example, most modem vehicles are usually equipped with one or more electronic devices such as a global positioning system (GPS) to assist a person driving the vehicle. If the electronic device is not mounted securely in the vehicle, the electronic device easily falls down or hits other things when the vehicle speeds up, brakes or turns. Therefore, electronic devices are often fastened to an unmovable holding device or a movable holding device in the vehicle. However, an unmovable holding device does not allow the electronic device to be moved to a desired place. Furthermore, conventional movable holding devices only use a simple structure such as a suction cup to mount the movable holding device in the vehicle. Because the simple structure usually can be detached easily, the simple structure often does not hold the conventional movable holding device securely in place in the vehicle. Thus, the electronic device mounted in the conventional movable holding device still cannot be mounted securely in the vehicle.

To overcome the shortcomings, the present invention provides a holding device to mitigate or obviate the aforementioned problems.

The main objective of the present invention is to provide a holding device that can be moved to a desired place in a vehicle having a windshield and a dashboard and is also securely mounted in the vehicle. The holding device is mounted between a vehicle's windshield and dashboard and has a base, a stabilizing panel and a bracket. The base is attached detachably to the windshield. The stabilizing panel is mounted pivotally on the base and is attached detachably to the dashboard. The bracket is mounted slidably on the base and connects to the stabilizing panel.

Other objectives, advantages and novel features of the invention will become more apparent from the following detailed description when taken in conjunction with the accompanying drawings.

### IN THE DRAWINGS

Fig. 1 is a perspective view of a first embodiment of a holding device in accordance with the present invention;
Fig. 2 is an exploded perspective view of the holding device in Fig. 1;
Fig. 3 is a side view of the holding device in Fig. 1;
Fig. 4 is an operational side view in partial section of the holding device in Fig. 1 holding an electronic device;
Fig. 5 is an operational perspective view of a second embodiment of a holding device in accordance with the present invention holding an electronic device;
Fig. 6 is an operational perspective view of a third embodiment of a holding device in accordance with the present invention holding an electronic device; and
Fig. 7 is an operational side view of the holding device in Fig. 1 mounted securely in a vehicle.

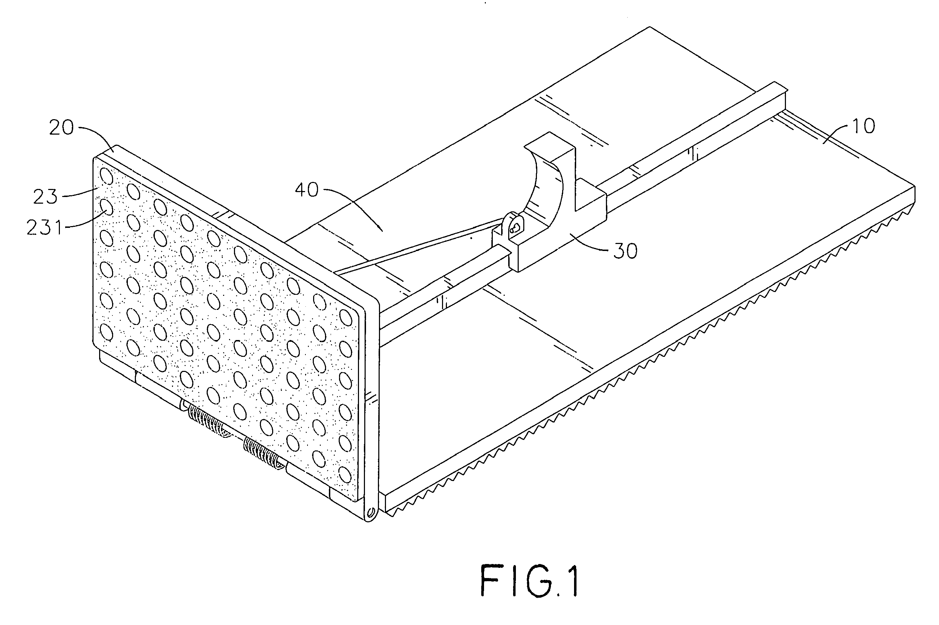

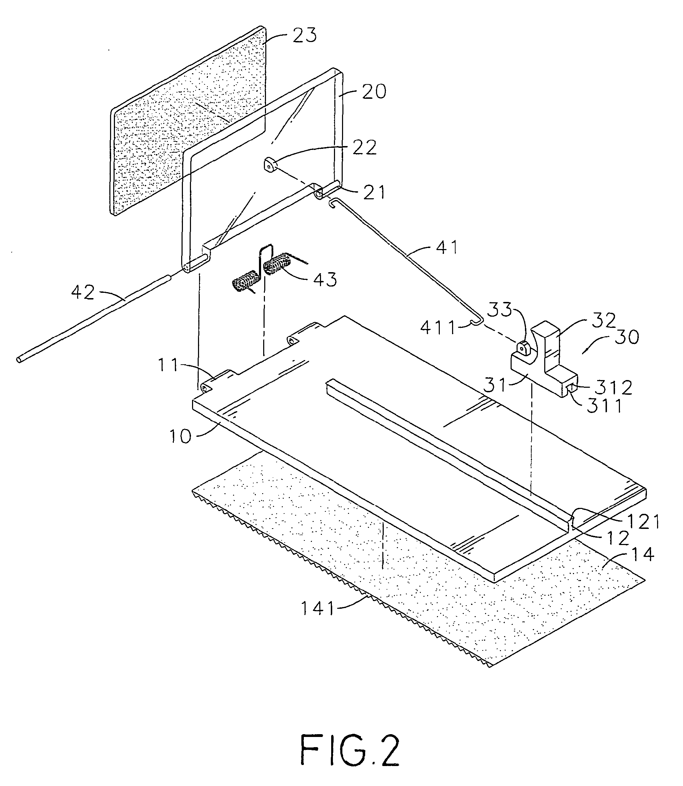

With reference to Figs. 1 and 2, a holding device in accordance with the present invention comprises a base (10), a stabilizing panel (20), a bracket (30) and may have a connecting assembly (40).

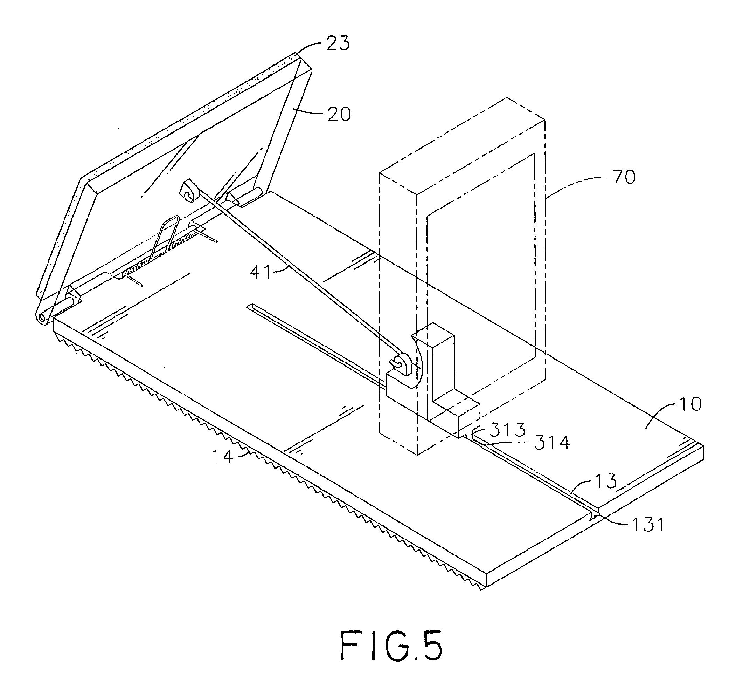

With further reference to Fig. 5, the base (10) may have a front end, a rear end, a top, a bottom, multiple hinge barrels (11), a nonskid pad (14) and a mounting rail (12) or a slot (13). The hinge barrels (11) are formed on and protrude from the front end of the base (10). The nonskid pad (14) is attached securely to the bottom of the base (10), may be a material that has great friction such as rubber, a tacky polymer or the like, has a distal side and may have multiple teeth (141) or multiple concave recesses. The teeth (141) are formed on the distal side of the nonskid pad (14). The concave recesses are formed in the distal side of the base (10). The mounting rail (12) is formed longitudinally on the top of the base (10) and has a top and a flange (121). The flange (121) is formed transversely on the top of the mounting rail (12). The slot (13) is formed longitudinally in the top of the base (10) and has a bottom, two sides, two fastening recesses (131) and an opening. The fastening recesses (131) are formed respectively in the two sides of the slot (13) adjacent to the bottom of the slot (13). The opening of the slot (13) is formed in the rear end of the base (10).

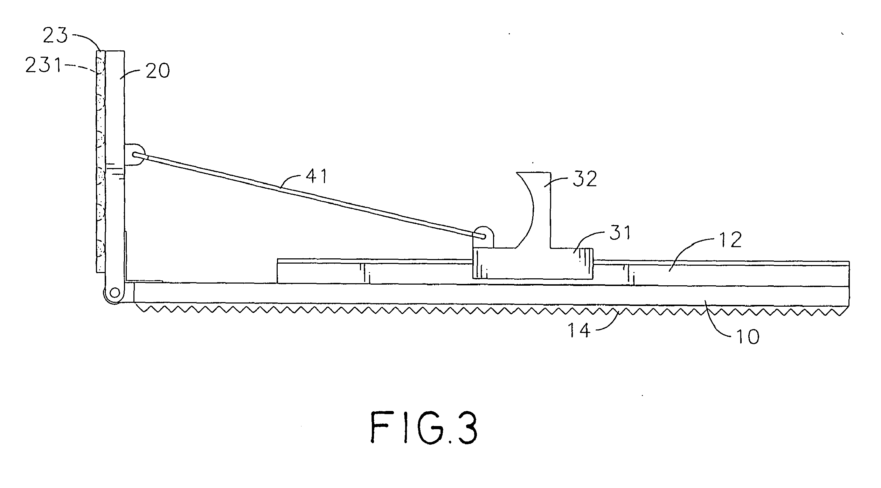

With further reference to Fig. 3, the stabilizing panel (20) is mounted pivotally on the base (10), has a front surface, a bottom end, a rear surface, and a connecting pad (23) and may have multiple hinge barrels (21) and a fastening protrusion (22). The connecting pad (23) is attached securely to the front surface of the stabilizing panel (20), may be a material that has great friction such as rubber, a tacky polymer or the like and may have a distal side and multiple teeth or multiple concave recesses (231). The teeth are formed on the distal side of the connecting pad (23). The concave recesses (231) are formed in the distal side of the connecting pad (23). The hinge barrels (21) are formed on and protrude from the bottom end of the stabilizing panel (20) and correspond to and align with the hinge barrels (11) on the base (10). The fastening protrusion (22) is formed on and protrudes from the rear surface of the stabilizing panel (20) and has a central hole.

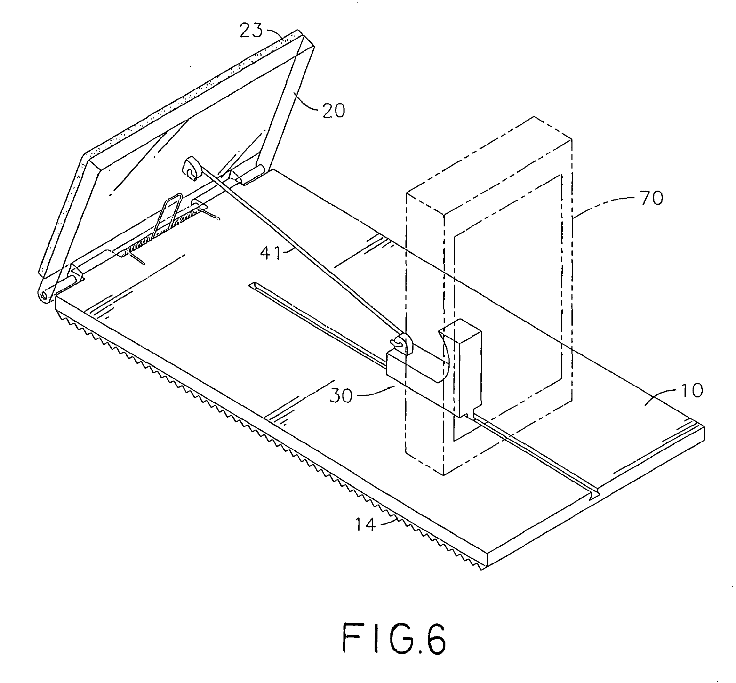

With further reference to Fig. 6, the bracket (30) is mounted slidably on the base (10), connects to the stabilizing panel (20), may be L-shaped or T-shaped and may comprise a main bar (31) and a branch bar (32). The main bar (31) is mounted slidably on the base (10), has a top surface and may have a bottom surface, a fastening protrusion (33) and a slot (311) or a mounting rail (313). The slot (311) is formed longitudinally in the bottom surface of the main bar (31), is mounted slidably on the mounting rail (12) on the base (10) and has two sides and two fastening recesses (312). The fastening recesses (312) are formed respectively in the two sides of the slot (311) and engage the flange (121) on the mounting rail (12) on the base (10) to hold the bracket (30) on the base (10). The mounting rail (313) is formed longitudinally on and protrudes from the bottom surface of the main bar (31), is mounted slidably in the slot (13) in the base (10) and has a bottom surface and a flange (314). The flange (314) is formed transversely on the bottom surface of the mounting rail (313) and engages the fastening recesses (131) in the slot (13) in the base (10) to hold the bracket (30) on the base (10). The branch bar (32) is formed on and protrudes perpendicularly from the top surface of the main bar (31). The fastening protrusion (33) is formed on and protrudes from the top surface of the main bar (31) and has a central hole.

The connecting assembly (40) is mounted between the stabilizing panel (20) and the base (10) or the bracket (30) and comprises a connecting rod (41), a pivot pin (42) and a torsion spring (43). The connecting rod (41) connects to the stabilizing panel (20) and the bracket (30), has two ends and may have two hooks (411). The hooks (411) are formed respectively on the ends of the connecting rod (41) and respectively engage the central holes in the fastening protrusions (22, 33) on the stabilizing panel (20) and the bracket (30). The pivot pin (42) extends through the aligned hinge barrels (11, 21) on the base (10) and the stabilizing panel (20) to connect the stabilizing panel (20) pivotally to the base (10). The torsion spring (43) is mounted around the pivot pin (42) and presses against the base (10) and the stabilizing panel (20) to force the rear surface of the stabilizing panel (20) away from the top of the base (10).

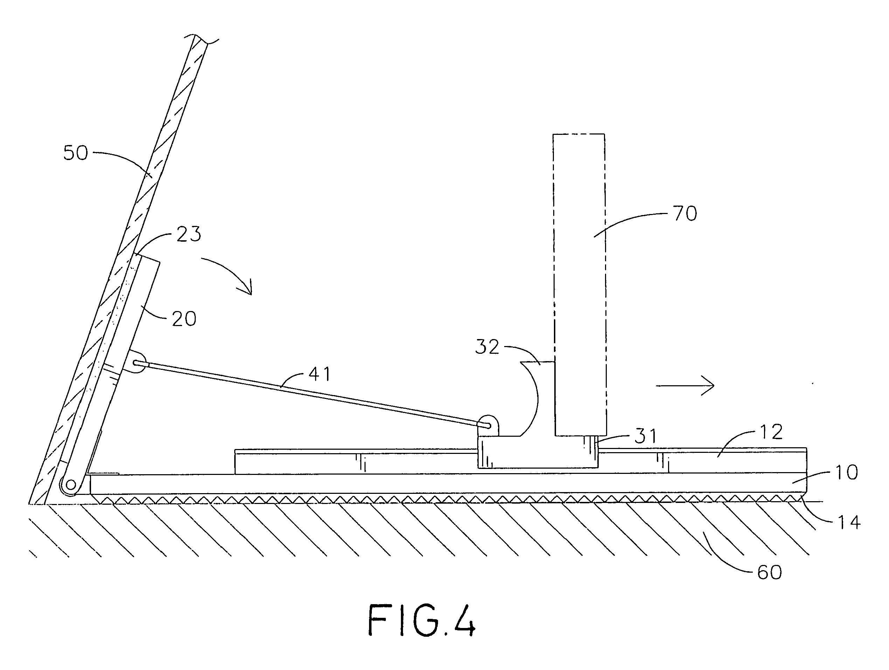

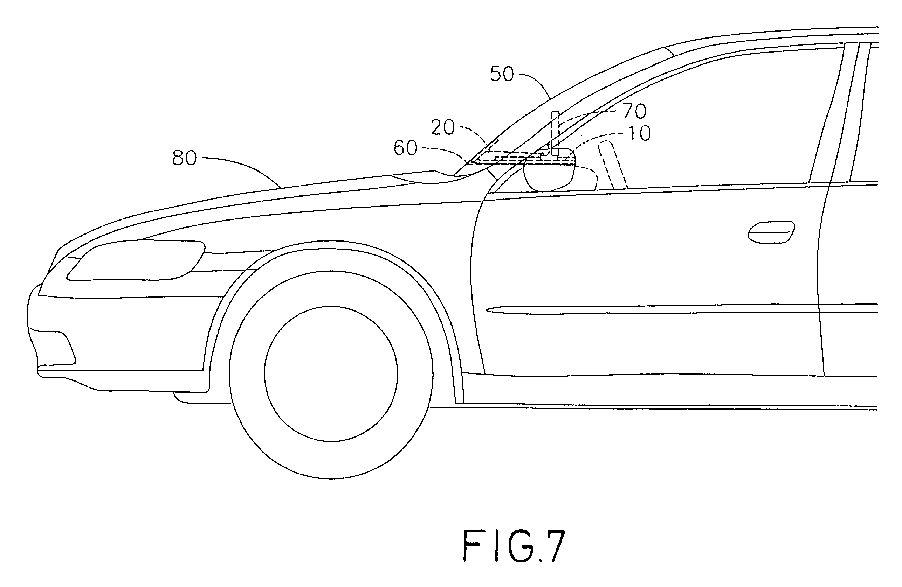

With further reference to Figs. 4 and 7, the holding device as described is mounted in a vehicle (80) to hold an electronic device (70). The vehicle (80) has a windshield (50) and a dashboard (60) with a top. The nonskid pad (14) on the base (10) is mounted on the top of the dashboard (60) by the teeth (141), and the connecting pad (23) on the stabilizing panel (20) is attached to the windshield (50) by the concave recesses (231). Therefore, the holding device not only can be moved to a desired place but also is mounted securely in the vehicle (80) with the friction between nonskid pad (14), dashboard (60), the stabilizing panel (20) and the windshield (50).

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A holding device comprising:
a base (10);
a stabilizing panel (20) mounted pivotally on the base (10) and having
a front surface;
a bottom end;
a rear surface; and
a connecting pad (23) being attached securely to the front surface of the stabilizing panel (20); and
a bracket (30) being mounted slidably on the base (10) and connecting to the stabilizing panel (20).

2. The holding device as claimed in claim 1, wherein the base (10) has
a bottom;
a front end;
a rear end;
a top; and
a nonskid pad (14) being attached to the bottom of the base (10) and having a distal side.

3. The holding device as claimed in claim 2 further comprising a connecting assembly (40) mounted between the stabilizing panel (20), the base (10) and the bracket (30), wherein
the base (10) further has multiple hinge barrels (11) formed on and protruding from the front end of the base (10);
the stabilizing panel (20) further has multiple hinge barrels (21) formed on the bottom end of the stabilizing panel (20); and
the connecting assembly (40) comprises
a connecting rod (41) connecting to the stabilizing panel (20) and the bracket (30) and having two ends;
a pivot pin (42) extending through the aligned hinge barrels (11,21) on the base (10) and the stabilizing panel (20); and
a torsion spring (43) being mounted around the pivot pin (42) and pressing against the base (10) and the stabilizing panel (20).

4. The holding device as claimed in claim 2, wherein the nonskid pad (14) on the base (10) has multiple teeth (141) formed on the distal side of the nonskid pad (14).

5. The holding device as claimed in claim 2, wherein
the connecting pad (23) of the stabilizing panel (20) has a distal side and multiple concave recesses (231) formed in the distal side.

6. The holding device as claimed in claim 3, wherein the bracket (30) comprises
a main bar (31) being mounted slidably on the base (10) and having a top surface; and
a branch bar (32) being formed on and protruding perpendicularly from the top surface of the main bar (31).

7. The holding device as claimed in claim 6, wherein
the stabilizing panel (20) further has a fastening protrusion (22) being formed on and protruding from the rear surface of the stabilizing panel (20) and having a central hole;
the main bar (31) of the bracket (30) further has a fastening protrusion (33) being formed on and protruding from the top surface of the main bar (31) and having a central hole; and
the connecting rod (41) further has two hooks (411) being formed respectively on the ends of the connecting rod (41) and respectively engaging the central holes in the fastening protrusions (22, 33) on the stabilizing panel (20) and the bracket (30).

8. The holding device as claimed in claim 6, wherein
the base (10) further has a mounting rail (12) being formed longitudinally on the top of the base (10) and having
a top; and
a flange (121) being formed transversely on the top of the mounting rail (12); and
the main bar (31) of the bracket (30) has
a bottom surface; and
a slot (311) being formed longitudinally in the bottom surface of the main bar (31), being mounted slidably on the mounting rail (12) on the base (10) and having
two sides; and
two fastening recesses (312) being formed respectively in the two sides of the slot (311) and engaging the flange (121) on the mounting rail (12) on the base (10).

9. The holding device as claimed in claim 6, wherein the bracket (30) is T-shaped.

10. The holding device as claimed in claim 7, wherein
the base (10) further has
a slot (13) being formed longitudinally in the top of the base (10) and having
a bottom;
two sides;
two fastening recesses (131) being formed respectively in the two sides of the slot (13) adjacent to the bottom of the slot (13); and
an opening being formed in the rear end of the base (10); and
the main bar (31) of the bracket (30) has
a bottom surface; and
a mounting rail (313) being formed longitudinally on and protruding from the bottom surface of the main bar (31), being mounted slidably in the slot (13) in the base (10) and having
a bottom surface; and
a flange (314) being formed transversely on the bottom surface of the mounting rail (313) and engaging the fastening recesses (131) in the slot (13) of the base (10).
